(19) Europäisches Patentamt
European Patent Office
Office européen des brevets

(11) Veröffentlichungsnummer: **0 558 929 A1**

# (12) EUROPÄISCHE PATENTANMELDUNG

(21) Anmeldenummer: **93101480.7**

(22) Anmeldetag: **30.01.93**

(51) Int. Cl.5: **C08G 18/10**, C08G 18/80, C08L 63/00

(30) Priorität: **19.02.92 DE 4204921**

(43) Veröffentlichungstag der Anmeldung: **08.09.93 Patentblatt 93/36**

(84) Benannte Vertragsstaaten: **BE DE FR GB IT NL SE**

(71) Anmelder: **Witco GmbH**
**Ernst-Schering-Strasse 14, Postfach 1620**
**D-59180 Bergkamen(DE)**

(72) Erfinder: **Burba, Christian, Dr.Dipl.-Chem.**
**Gerhart-Hauptmann-Strasse 9**
**W-4715 Ascheberg-Herbern(DE)**
Erfinder: **Mrotzek, Werner, Dr. Dipl.-Ing.**
**Dresdener Strasse 24**
**W-4600 Dormund(DE)**
Erfinder: **Volle, Jörg**
**Wibbeltstrasse 4**
**W-4714 Selm-Bork(DE)**

## (54) Harnstoff- und/oder Urethangruppen enthaltende prepolymere Imidazolverbindungen und deren Verwendung als Härtungsmittel für Epoxidharze.

(57) Die Erfindung betrifft Harnstoff- und/oder Urethangruppen enthaltende prepolymere Imidazolderivate und ihre Verwendung als Härtungsmittel in faserverstärkten Kunststoffen auf Basis von Epoxidharzen.

EP 0 558 929 A1

Gegenstand der Erfindung sind neue prepolymere Imidazolylderivate, ihre Verwendung als Härtungsmittel in Epoxidharzzusammensetzungen, sie enthaltende härtbare Epoxidharzzusammensetzungen, bestehend aus einem Epoxidharz und aus Harnstoff- und/oder Urethangruppen enthaltenden Verbindungen auf Basis von Additionsprodukten aus Imidazolverbindungen und prepolymeren Isocyanaten und gegebenenfalls üblichen Härtungs- und Lösungsmitteln zur Herstellung von Formkörpern.

Für die Herstellung von Verbundwerkstoffen werden heute im Prinzip zwei Verfahren angewandt.

Bei dem Naß-in-Naß-Verfahren werden die Verstärkungsmaterialien mit der härtbaren Mischung imprägniert und in der Hitze in einer Stufe bis zum duromeren Endzustand ausgehärtet (Einstufenverfahren).

Beim Zweistufenverfahren werden aus den Verstärkungsmaterialien und der härtbaren Mischung zunächst sogenannte Prepregs hergestellt, die dann in einem zeitlich getrennten zweiten Verfahrensschritt zu Fertigteilen weiterverarbeitet werden. Dabei ist verfahrenstechnisch noch einmal zwischen der Verwendung lösungsmittelhaltiger und lösungsmittelfreier Arbeitsweise zu unterscheiden.

Die Herstellung der Prepregs erfolgt normalerweise in einem kontinuierlichen Prozeß, in dem die Verstärkungsmaterialien entweder durch ein Imprägnierbad des einzusetzenden HarzHärter-Gemisches geleitet werden oder das Imprägniermittel wird erst unmittelbar vor seinem Auftrag auf das Trägermaterial vermischt und mittels einer besonderen Vorrichtung aufgerakelt. Die Steuerung der auf eine bestimmte Trägermaterialbahn aufzubringenden Imprägniermittelmenge erfolgt dabei außer über die Viskosität des Imprägniermittels über nachgeschaltete Abquetschwalzen.

Bei lösungsmittelhaltigen Systemen wird nach dem Impragnierprozeß durch Wärmezufuhr das in der Imprägnierlösung enthaltende Lösungsmittel verdampft und gleichzeitig das Harzsystem vom A- in den B-Zustand überführt. Aus den mit flüssigem bis stark klebrigem Imprägniermittel getränkten Verstärkungsmaterialien wird je nach Verfahrensbedingungen und verwendetem Harzsystem ein schwach klebriger bis fast trockener Prepreg. Bei diesem Verfahrensschritt ist es wichtig, daß einerseits das Lösungsmittel der Imprägniermischung vollständig entzogen wird, andererseits aber der für die Prepreg-Härtung im zweiten Verfahrensschritt notwendige latente Härter noch nicht anspringt, um ein ungewolltes Ausreagieren der imprägnierten Verstärkungsmaterialien zu verhindern.

Bei lösungsmittelfreien Systemen erfolgt abhängig von der chemischen Zusammensetzung des Harzsystems nach der Imprägnierung entweder ebenfalls eine kurze Wärmebehandlung des Materials, oder die Verstärkungsstoffe werden unmittelbar nach der Imprägnierung unter Verzicht auf eine gesonderte Wärmebehandlung beidseitig mit Trennfolien kaschiert und einer systemadäquaten Zwischenlagerung zugeführt. Im Verlaufe dieser Zwischenlagerung tritt entweder ein allmählicher Übergang des Harzsystems in den B-Zustand ein oder das Imprägniermittel wird unter weitgehendem Verzicht auf chemische Veränderungen allein durch physikalische Effekte auf den Trägermaterialien fixiert.

Die so erhaltenen Prepregs lassen sich als Rollen zwischenlagern und transportieren, ehe sie dem jeweiligen Anwendungsfall entsprechend zugeschnitten und in Bauteildicke übereinander geschichtet werden. Durch gleichzeitige Druck- und Temperatureinwirkung wird der Prepregstapel zu einem hochfesten Formteil ausgehärtet, wobei die noch niedermolekularen, fließfähigen Harze in den hochmolekularen C-Zustand des Duromers übergehen.

Während beim Einstufenverfahren lange offene Zeiten und kurze Aushärtungszeiten bei niedrigen Härtungstemperaturen gefordert werden, kommt beim Zweistufenverfahren als weiteres Kriterium noch eine möglichst lange Lagerstabilität der Prepregs hinzu. Dabei werden Lagerungstemperaturen unterhalb Raumtemperatur von der Praxis immer weniger akzeptiert.

Unabhängig von der Prepregherstellung soll ihre Aushärtung bei möglichst tiefen Temperaturen innerhalb praxisgerechter Zeit erfolgen, das Temperaturmaximum der exothermen Reaktion auch bei größeren Schichtdicken auf einem niedrigen Niveau verbleiben und das physikalische Eigenschaftsniveau der Endprodukte den Erfordernissen der Praxis angepaßt sein.

Zwar wurden bereits Härtungssysteme beschrieben, welche die Härtung deutlich unter 100 °C ermöglichen, jedoch besteht in der Praxis nach wie vor ein Bedarf an Niedrigsttemperaturhärtern mit gleichzeitig guter Lagerstabilität der reaktiven Mischung. Dieser Bedarf besteht insbesondere auf Gebieten, auf welchen großflächige Formteile erstellt werden müssen (Prepregs) und deren endgültige Aushärtung bei höheren Temperaturen besonderer apparativer Aufwendungen bedürfte.

Diese Forderungen hinsichtlich des Härtungsverhaltens und Eigenschaftsniveaus gelten in gleicher Weise auch für die im Naß-in-Naß-Verfahren zu verarbeitenden Epoxidharzsysteme.

Für gewisse Anwendungszwecke ist nur eine Anhärtung bis zur Formstabilität der Formkörper erforderlich bzw. sogar erwünscht, wobei nach einer eventuellen Zwischenlagerung die endgültige Aushärtung in einem nachgeschalteten Temperprozeß bei den erforderlichen Temperaturen erfolgt. Dabei ist es aber wichtig, daß bereits bei der Anhärtung die thermische Beständigkeit des Materials über die Härtungstemperatur steigt, da ansonsten die Entformung nur nach Absenkung der Formteiltemperatur möglich ist.

Das in härtbaren Mischungen auf Basis von Epoxidharzen seit langem als latenter Härter verwendete Dicyandiamid wird zur Erzielung der angestrebten Eigenschaften in der Regel mit Co-Härtungsmitteln und/oder Beschleunigern kombiniert. Aus der Literatur sind auf diesem Gebiet daher eine Vielzahl von Vorschlägen bekannt geworden.

Aufgabe der vorliegenden Erfindung war es, unter Vermeidung der Nachteile des Standes der Technik härtbare Mischungen auf Basis von Epoxidverbindungen und latenten und in den Epoxidharzen löslichen bzw. homogen verteilbaren Härtungsmitteln zu finden, welche bei niedrigen Temperaturen innerhalb praxisgerechter Zeit ohne hohe exotherme Temperaturspitzen zum formstabilen Zustand anhärten bzw. zum duromeren Endzustand aushärten, eine den Anforderungen der Praxis entsprechende thermische Beständigkeit besitzen, und welche in Prepregs bei Raumtemperatur über eine ausreichende Lagerstabilität verfügen.

Diese Aufgabe wird gelöst durch Verwendung neuer Harnstoff- und/oder Urethangruppen enthaltende Verbindungen auf Basis von Additionsprodukten aus Imidazolverbindungen und prepolymeren Isocyanaten.

Ein Gegenstand der Erfindung sind daher Verbindungen der allgemeinen Formel I

$$A\text{-}R\text{-}(xR^1x\text{-}R)e\text{-}xR^1x\text{-}R\text{-}A \qquad I$$

worin bedeuten

A =

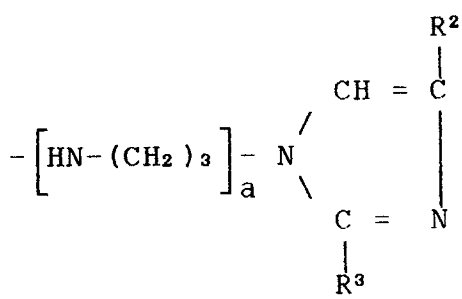

R =

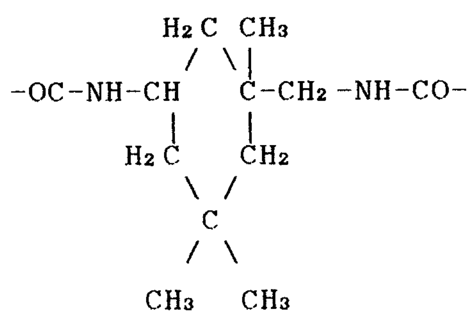

$R^1$ =

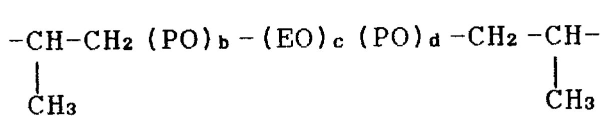

x = -O- oder -NH-, EO = $-CH_2-CH_2-O-$

PO =

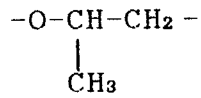

mit

a = 0 oder 1 und worin b, c, d zwischen 0 - 50 und die Summe b + c + d zwischen 0 - 50, vorzugsweise zwischen 10 - 40, insbesondere 15 - 35, liegt, e = 0 - 10, vorzugsweise 0 - 5 sein kann und

$R^2$, $R^3$ unabhängig voneinander Wasserstoff, $CH_3$, $C_2H_5$ oder der Phenylrest sein können.

Ein weiterer Gegenstand der Erfindung sind Verbindungen der allgemeinen Formel I, dadurch herstellbar, daß in erster Stufe Ethergruppen enthaltende Diole und/oder Diamine an Isophorondiisocyanat (IPDI) bei Temperaturen von 80 - 140 °C, gegebenenfalls unter Mitverwendung von Lösungsmitteln und Katalysatoren im Molverhältnis von Diol und/oder Diamin zu IPDI von 1 : 1,8 bis 1 : 2 addiert werden und in zweiter Stufe diese freie Iso-cyanatgruppen enthaltenden Addukte mit Imidazolverbindungen der allgemeinen Formel II

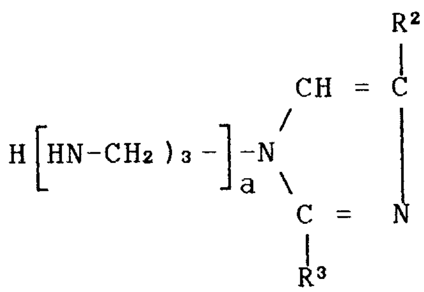

II

in der $R^2$ und $R^3$ unabhängig voneinander Wasserstoff, $CH_3$, $C_2H_5$ oder der Phenylrest sein können und a = 0 oder 1 ist, gegebenenfalls unter Mitverwendung von Lösungsmitteln bei Temperaturen von 100 - 120 °C in equivalenten Mengen umgesetzt werden.

Ein weiterer Gegenstand der Erfindung ist dadurch gekennzeichnet, daß die Härtungsmittel gemäß Anspruch 1 in Mengen von 10 bis 50 g, insbesondere 20 bis 30 g, bezogen auf 100 g Epoxidharz, mitverwendet werden.

Ein weiterer Gegenstand der Erfindung ist dadurch gekennzeichnet, daß als Epoxidharze gemäß Anspruch 1 c) Glycidylether auf Basis von Bisphenol A, Bisphenol F und Novolaken mit Epoxidwerten von 0,18 - 0,6, insbesondere 0,39 - 0,55, mitverwendet werden. Handelsübliche halogenierte, insbesondere bromierte Epoxidharze mit ca. 18 Gew.-% Brom auf Basis der oben angegebenen Rohstoffe können ebenfalls verwendet werden.

Die erfindungsgemäßen Verbindungen der allgemeinen Formel I sind herstellbar durch Addition von Isophorondiisocyanat (IPDI) an Ethergruppen enthaltende Diamine oder Diole bei Temperaturen von 20 - 90 °C, vorzugsweise 60 - 70 °C, gegebenenfalls unter Mitverwendung von Katalysatoren wie beispielsweise von Dibutylzinndilaurat (DBTL), gegebenenfalls unter Mitverwendung von Lösungsmitteln im Molverhältnis von Diol bzw. Diamin zu IPDI von ca. 1 : 1,8 bis 1 : 2, und weitere Umsetzung des freie Isocyanatgruppen enthaltenden Additionsproduktes in zweiter Stufe mit Imidazolverbindungen und/oder N-Aminoalkylimidazolverbindungen bei Temperaturen von 80 -140 °C` vorzugsweise 100 - 120 °C, gegebenenfalls unter Mitverwendung von Lösungsmittel im Molverhältnis der prepolymeren Isocyanate zu den Imidazol/N-Aminoalkylimidazolverbindungen in ca. equivalenten Mengen.

Die erfindungsgemäß mitverwendeten Ethergruppen enthaltenden Diole und Diamine sind handelsübliche Produkte auf Basis von vorzugsweise Polyethylenoxiden, Polypropylenoxiden und deren Misch- bzw. Blockcopolymeren. Dieses sind handelsübliche Produkte und sind z. B. unter den Bezeichnungen

DESMOPHEN® (Warenzeichen der Fa. Bayer AG)

LUPRANOL® (Warenzeichen der Fa. BASF)

JEFFAMINE® (Warenzeichen der Fa. Texaco Chem. Co.)

im Handel erhältlich.

Erfindungsgemäß bevorzugt werden Diole und Amine mit Molgewichten im Bereich von ca. 400 - 3000, vorzugsweise 600 - 2500 und insbesondere 1000 - 2000, eingesetzt.

Als Isophorondiisocyanat werden Produkte der handelsüblichen Qualitäten mitverwendet.

Die mitverwendeten Imidazolverbindungen sind ebenfalls handelsüblich. Bevorzugt werden Imidazol, 2-Methyl-imidazol, 2-Ethyl-4-methylimidazol, 2-Phenylimidazol und N-(3-Aminopropyl)-imidazol allein oder in Mischungen eingesetzt.

Die erfindungsgemäßen Verbindungen sind technische Produkte, welche bei einem Molverhältnis von Diol und/oder Diamin zu IPDI von insgesamt 1 : 2 überwiegend als Verbindungen der allgemeinen Formel I mit e = 0 , das heißt weitgehend ohne höhermolekulare Aufbauprodukte, entstehen. Daneben sind noch geringere Anteile an Aufbauprodukten vorhanden, in denen e >0 ist. Bei einem Molverhältnis von Diol und/oder Diamin zu IPDI von 1 : 1,8 bis 1 : <2 werden diese Aufbauprodukte zunehmen, das heißt, in der Reaktionsmischung wird die Molgewichtsverteilung der Produkte größer werden, wobei e Werte zwischen ca. 0,1 bis 10, im allgemeinen zwischen 0,5 und 5, annehmen kann.

Erfindungsgemäß bevorzugt sind Verbindungen, in denen Polyetherpolyole oder Polyetheramine auf Basis von Propylenoxiden mitverwendet werden, wobei gegebenenfalls gewisse Anteile an Ethylenoxid statistisch verteilt oder blockweise in das Molekül eingebaut sein können und dieser Anteil den an Propylenoxid nicht übersteigt. Die Molgewichte dieser Polyetherverbindungen liegen bevorzugt im Bereich von ca. 600 - 2500 und insbesondere zwischen ca. 1000 - 2000.

Die erfindungsgemäß mitverwendeten Verbindungen gemäß den Ansprüchen wirken sowohl als Härtungsmittel als auch als Beschleuniger, so daß auf die mögliche Mitverwendung üblicher Beschleuniger und Härtungsmittel verzichtet werden kann. Andererseits können die erfindungsgemäßen Verbindungen mit Erfolg als Beschleuniger in handelsüblichen Härtungsmitteln, wie beispielsweise Dicyandiamid, eingesetzt werden.

Die Menge an Härtungsmitteln bzw. Härtungsmittelbeschleunigern kann innerhalb weiter Grenzen variiert werden. Sie wird bestimmt durch den beabsichtigten Anwendungszweck und die gegebenenfalls dadurch vorgegebenen Härtungsbedingungen. Die erfindungsgemäßen Verbindungen werden in Mengen von 10 bis 50, vorzugsweise 15 bis 40 Gewichtsteilen, bezogen auf 100 Gewichtsteile Epoxidverbindung, angewandt, wobei bei den halogenierten (bromierten) Epoxidharzen sich Mengen von 5 - 10 g/100 g Epoxidharz als vorteilhaft erwiesen haben.

Die zur Herstellung der härtbaren Mischung mitverwendeten Epoxidharze sind Glycidylester und -ether mit zwei oder mehr Epoxidgruppen pro Molekül wie vorzugsweise die Glycidylether auf Basis von ein- oder mehrwertigen Phenolen. Erfindungsgemäß bevorzugt werden Glycidylether von 2,2-Bis(4-hydroxyphenyl)-propan (Bisphenol-A) mit Epoxidwerten von 0,2 - 0,6, insbesondere die bei Raumtemperatur halbfesten hochviskosen bis mittelviskosen Verbindungen mit Epoxidwerten um 0,39 bis 0,55. Daneben haben sich auch die Glycidylether auf Basis von Bisphenol F und die Novolake als vorteilhaft erwiesen.

Handelsbüliche halogenierte, vorzugsweise bromierte Epoxidharze mit den bekannten Bromgehalten, vorzugsweise um ca. 18 Gew.-%, auf Basis der oben angeführten Harze können ebenfalls eingesetzt werden.

Zur Modifizierung der Eigenschaften des Endprodukts können neben anderen Epoxidharzen auch Modifizierungs- oder Hilfsstoffe mitverwendet werden wie Phenolharze, Melaminharze, Silikonharze.

Zur Einstellung der gewünschten Viskosität können unterschiedlich viskose Harze oder Verdünnungsmittel mitverwendet werden, aber auch die üblichen Lösungsmittel wie Dimethylformamid, Aceton, Methylethylketon, Methylglykol, Propylenglykolmonomethylether oder deren Mischungen eingesetzt werden.

Zur Herstellung der Prepregs werden organische und anorganische Fasern, Vliese und Gewebe, insbesondere aber Glas, mitverwendet.

Die erfindungsgemäßen Härtungsmittel können mit Erfolg in lösungsmittelfreien und lösungsmittelhaltigen Prepregs auf Basis von Epoxidharzen und gegebenenfalls üblichen Härtungsmitteln verwendet werden. Zur Herstellung der lösungsmittelfreien Prepregs werden die Trägermaterialien bei gegebenenfalls erhöhter Temperatur nach an sich bekannten Verfahren mit den Bindemittelsystemen getränkt und systemadäquat gelagert, ehe sie wie die Lösungsmittel enthaltenden Systeme weiterverarbeitet werden.

Die Herstellung der lösungsmittelhaltigen Prepregs geschieht nach der an sich bekannten Methode, bei der die Trägermaterialien in einem Imprägnierbad mit der reaktiven Harzmischung getränkt und nach dem Abquetschen der überschüssigen Harzmenge kontinuierlich unter Energiezufuhr (meist Wärme) bei gleichzeitigem Entzug des Lösungsmittels vom A- in den B-Zustand überführt werden. Je nach gewünschter Prepreg-Konsistenz (klebrig bis fest) werden diese anschließend beidseitig mit einer Trennfolie versehen und für die Lagerung und den Transport aufgerollt. Die Weiterverarbeitung erfolgt durch Zuschneiden und Zusammenlegen der einzelnen Prepreg-Lagen zu einem Stapel, aus dem durch formgebende Maßnahmen unter gleichzeitiger Wärmezufuhr ein hochvernetztes Werkstück entsteht.

Weitere Beispiele für lösungsmittelfreie Systeme sind unter anderem heißhärtende Einkomponentenklebstoffe z. B. für die Verklebung von Karosserieteilen in der Automobilindustrie und Epoxidharz-Beschichtungen, die entweder naß oder als Pulver aufgebracht werden.

Herstellung der erfindungsgemäßen Härtungsmittel

Beispiel 1

a) 44,4 g Isophorondiisocyanat werden unter Stickstoffatmosphäre vorgelegt und nach Erwärmen auf ca. 50 °C mit 200 g JEFFAMINE® D 2000 (Polyoxypropylendiamin; Warenzeichen der Fa. Texaco Chem. Co) versetzt. Man läßt 1 Stunde bei 100 °C nachreagieren.
Das Produkt hat folgende Kennzahlen:

| | |
|---|---|
| Isocyanatzahl: | ca. 45 |
| Aminzahl: | <1 |
| Viskosität: | 10 Pa•s/60 °C. |

b) Zu oben beschriebenem Produkt werden bei etwa 100 °C portionsweise 16,4 g Methylimidazol gegeben. Maß läßt anschließend 1 Stunde bei 100 °C nachrühren.
Das Produkt hat folgende Kennzahlen:

| | |
|---|---|
| Aminzahl: | ca. 45 |
| Viskosität: | 85 Pa•s/60 °C. |

Beispiel 2

a) 200 g DESMOPHEN® 1900 U (Polyoxypropylenglykol; Warenzeichen der Fa. Bayer AG) werden unter Stickstoffatmosphäre vorgelegt und etwa 2 Stunden bei 100 °C und einem Vakuum von 40 mbar entwässert. Nach Kühlen auf etwa 35 °C und Zugabe von 0,2 g METATIN® 712 (Dibutylzinndilaurat; Warenzeichen der Fa. Acima AG) werden innerhalb von ca. 60 Minuten 44,4 g Isophorondiisocyanat zugegeben. Man läßt etwa 2 Stunden bei 75 °C nachreagieren.
Das Reaktionsprodukt hat folgende Kennzahlen:

| | |
|---|---|
| NCO-Zahl: | ca. 45 |
| Viskosität: | 6 Pa•s/25 °C. |

b) Zu oben beschriebenem Produkt werden nach Erhitzen auf ca. 100 °C portionsweise 13,6 g Imidazol gegeben. Man läßt anschließend 1 Stunde bei 120 °C nachrühren.
Das Reaktionsprodukt hat folgende Kennzahlen:

| | |
|---|---|
| Aminzahl: | ca. 45 |
| Viskosität: | 8,5 Pa•s/60 °C. |

Beispiel 3

244,6 g des in Beispiel 2 a) beschriebenen Reaktionsproduktes werden nach Erhitzen auf 100 °C mit 25 g N-(3-Amino-propyl)-imidazol versetzt. Man läßt 1 Stunde bei 120 °C nachrühren.

Das Reaktionsprodukt hat folgende Kennzahlen:

| | |
|---|---|
| Aminzahl: | ca. 80 |
| Viskosität: | 29,3 Pa•s/60 °C. |

Beispiel 4

244,6 g des in Beispiel 2 a) beschriebenen Reaktionsproduktes werden nach Erhitzen auf 100 °C mit 16,4 g 2-Methyl-imidazol versetzt. Man läßt 1 Stunde bei 120 °C nachrühren.

Das Reaktionsprodukt hat folgende Kennzahlen:

| | |
|---|---|
| Aminzahl: | ca. 45 |
| Viskosität: | 340 Pa•s/25 °C. |

Beispiel 5

a) 310 g Polyoxypropylenglykol 620 werden unter Stickstoffatmosphäre vorgelegt und etwa 2 Stunden bei 100 °C und einem Vakuum von 40 mbar entwässert.

Nach Kühlen auf etwa 35 °C und Zugabe von 0,3 g METATIN® 712 (Dibutylzinndilaurat; Warenzeichen der Fa. Acima AG) werden innerhalb von etwa 1 Stunde 222 g Isophorondiisocyanat zugegeben. Man läßt etwa 2 Stunden bei 75 °C nachrühren.

Das Reaktionsprodukt hat folgende Kennzahlen:

| | |
|---|---|
| NCO-Zahl: | ca. 100 |
| Viskosität: | ca. 50 Pa•s/25 °C. |

b) Zu vorbeschriebenem Produkt werden nach Erhitzen auf ca. 100 °C portionsweise 68,1 g Imidazol gegeben. Man läßt anschließend 1 Stunde bei 120 °C nachrühren. Das Produkt hat folgende Kennzahl:

| | |
|---|---|
| Aminzahl: | 92. |

Beispiel 6

111 g Isophorondiisocyanat werden unter Stickstoffatmosphäre vorgelegt und nach Erhitzen auf etwa 140 °C mit 100 g JEFFAMINE® D 400 (Polyoxypropylendiamin; Warenzeichen der Fa. Texaco Chem. Co.) versetzt. Man läßt 1 Stunde bei 100 °C nachreagieren. Anschließend werden portionsweise bei 150 - 160 °C 41 g 2-Methylimidazol zugegeben. Man läßt anschließend 1 Stunde bei 170 °C nachreagieren.

Das Produkt hat folgende Kennzahlen:

| | |
|---|---|
| Schmelzbereich: | 80 - 90 °C |
| Aminzahl: | ca. 150. |

Beispiel 7

Zu 244,4 g des in Beispiel 1 a) beschriebenen Reaktionsproduktes werden nach Erwärmen auf ca. 100 °C 22,0 g 2-Ethyl-4-methylimidazol gegeben. Man läßt 1 Stunde bei 120 °C nachreagieren.

Das Produkt hat folgende Kennzahlen:

| | |
|---|---|
| Aminzahl: | ca. 50 |
| Viskosität: | 36,4 Pa•s/75 °C. |

Herstellung der Härtungsmitteleinflüsse in Verbindung mit BPA-Basisharzen

100 g eines Epoxidharzes (Epoxid-Aquivalentgewicht ca. 190) werden mit 15 g des erfindungsgemäßen Reaktionsproduktes 1 vermischt und zur Prepreg-Herstellung eingesetzt.

Die Herstellung der Prepregs im Labormaßstab erfolgt durch Aufstreichen des Reaktionsgemisches auf ein ca. 0,1 $m^2$ großes Glasfilamentgewebe in Atlasbindung, welches nach der Imprägnierung beidseitig mit Trennfolien kaschiert und bei Raumtemperatur gelagert wird. Es resultieren stark klebende Prepregs, die ihre Konsistenz während der Lagerung nicht nennenswert verändern dürfen. Zur Weiterverarbeitung werden mehrere Lagen dieser Prepregs übereinandergelegt und bei einer Temperatur von 60 °C 16 Stunden lang oder bei 120 °C 2 Stunden lang unter leichtem Druck (ca. 0,1 - 0,5 bar) verpreßt.

Zur Ermittlung des in Tabelle 1 angegebenen Zeitraumes gleichbleibenden Prepregkonsistenz werden die Prepregs unter Normklima gelagert, und in Abständen von jeweils 24 Stunden erfolgt eine Prepregverpressung entsprechend den vorstehend genannten Bedingungen. Als Zeitraum eines unveränderten Prepregzustandes ist der Tag angegeben, nach dem erstmalig Veränderungen im Harzfluß gemessen wurden.

Die Bestimmung der ebenfalls in Tabelle 1 enthaltenen thermischen Beständigkeit des Probenmaterials erfolgt an 100 x 10 $mm^2$ großen Probekörpern entsprechend DIN 53 455 im Torsionsschwingversuch, die aus den verpreßten Laminaten entnommen wurden.

Die weiteren in Tabelle 1 für die anderen Beispiele aufgeführten Tg-Werte und Zeiträume unveränderter Prepregkonsistenz werden analog Beispiel 1 ermittelt.

Tabelle 1

Matrixeigenschaften in Verbindung mit BPA-Basisharzen

| Härtungsmittel Beispiel | Mischungsverhältnis Harz : Härter | Zeitraum unveränderter Prepregkonsistenz | Tg in °C nach 16 h 60 °C Härtung | Tg in °C nach 2 h 120 °C Härtung |
|---|---|---|---|---|
| 1 | 100 : 15 | 2 Wochen | | 128 |
| | 100 : 20 | 2 Wochen | 86 | 151 |
| | 100 : 25 | 2 Wochen | | 184 |
| | 100 : 30 | 2 Wochen | | 173 |
| | 100 : 35 | 2 Wochen | | 174 |
| 2 | 100 : 15 | | | 94 |
| | 100 : 20 | 2 Wochen | 85 | 135 |
| | 100 : 25 | 2 Wochen | | 147 |
| | 100 : 30 | 2 Wochen | | 148 |
| | 100 : 35 | 2 Wochen | | 150 |
| 6 | 100 : 10 | | | 93 |
| 7 | 100 : 25 | | 91 | 163 |

Ermittlung der Härtungsmitteleinflüsse in Verbindung mit bromierten Harzen

Beispiel 1

100 g eines in 25 g Methylethylketon (MEK) gelösten bromierten Epoxidharzes (Epoxidwert ca. 0,18, Bromgehalt ca. 18 %) werden mit 10 g einer 50 %igen Härterlösung aus dem erfindungsgemäßen Reaktionsprodukt und Methylethylketon (MEK) vermischt und zur Prepreg-Fertigung eingesetzt. Die Aufbereitung der Härterlösung erfolgt bei Raumtemperatur, wobei deren Konzentration grundsätzlich beliebig gewählt werden kann.

Zur Prepregherstellung im Labormaßstab wird zunächst ein ca. 0,1 $m^2$ großes Glasfilamentgewebe mit der Harz-Härter-Lösung getränkt. Daran anschließend erfolgt eine Wärmebehandlung des derart imprägnierten Verstärkungsmaterials von 2 Minuten bei 120 °C in einem Umlufttrockenschrank. Während dieses Prepregvorgangs wird zum einen das Lösemittel aus dem Imprägniermittel entfernt, und zum zweiten werden die Reaktionskomponenten von dem A- in den B-Zustand übergeführt. Es resultieren nahezu trockene, flexible Prepregs, die nach der Abkühlung bei Raumtemperatur bis zur Weiterverarbeitung mehrere Wochen gelagert werden können.

Die Prepregweiterverarbeitung zu ca. 1 mm dicken Laminaten erfolgt in einer Stunde bei 150 °C mit einem Preßdruck von ca. 1 bar. Das derart ausgehärtete Endprodukt zeigt keinerlei Mängel bezüglich der Haftung der einzelnen Prepreglagen.

Zur Bestimmung der thermischen Beständigkeit des Matrixmaterials werden anschließend aus den Laminaten 100 x 10 $mm^2$ große Probekörper entnommen und im Torsionsschwingversuch nach DIN 53 455 untersucht. Die Ergebnisse dieser Prüfung sind für verschiedene Mischungsverhältnisse in Tabelle 2 wiedergegeben.

Die weiteren ebenfalls in Tabelle 2 aufgeführten TG-Werte der anderen Beispiele werden analog Beispiel 1 mit dem dort angeführten Epoxidharz ermittelt. Als Vergleichsgröße wird zusätzlich der TG eines derzeit häufig benutzten Matrixmaterials mit Dicyandiamid als Härter und N-Methylimidazol als Beschleuniger mit in die Tabelle aufgenommen
(Mischungsverhältnis bromiertes Epoxidharz : Dicyandiamid : N-Methylimidazol = 100 : 5 : 0,8.

Tabelle 2

Thermische Beständigkeit der Laminate mit bromierten Harzen

| Härtungsmittel Beispiel | Mischungsverhältnis Harz : Härter | TG in °C nach Prepreglagerung von 1 Tag | 4 Wochen | 12 Wochen |
|---|---|---|---|---|
| 1 | 100 : 10 | 82 | | |
| | 100 : 20 | 125 | 130 | 129 |
| 3 | 100 : 20 | 101 | | |
| 4 | 100 : 20 | 105 | | |
| 5 | 100 : 10 | 104 | | |
| | 100 : 20 | 117 | | |
| Vergleichsbeispiel | 100 : 5 : 0,8 | 118 | | |

Ermittlung der Härtungsmitteleinflüsse in Verbindung mit BPA-Basisharzen

Zur Ermittlung der Materialeigenschaften bei Verwendung der ausgewählten Härtungsmittel werden zur Vermeidung verfälschender Einflüsse von Verstärkungs- und Zusatzmaterialien die Mischungen, bestehend allein aus Epoxidharz und Härtungsmittel, ausgehärtet und abgeprüft.

In den in der Tabelle 3 aufgelisteten Beispielen wird als Epoxidharz ein Glycidylether auf Basis von Bisphenol A mit einem Epoxidwert von 0,53 verwendet.

Zur Herstellung der Prüfkörper werden jeweils 100 g des Epoxidharzes mit der in der Tabelle 3 genannten Menge Härtungsmittel bei Raumtemperatur vermischt und in einem Stahlwerkzeug zu 4 mm dicken ebenen Formteilen ausgehärtet. Aus diesen Formteilen werden dann durch Sägen bzw. Fräsen Probekörper entnommen, an denen unter Einhaltung der nachstehend genannten Prüfnormen die in Tabelle 3 aufgeführten Eigenschaftswerte ermittelt sind.

| | | Prüfkörperabmessungen |
|---|---|---|
| Biegefestigkeit | DIN 53 482 | 80 x 10 x 4 $mm^3$ |
| Durchbiegung | DIN 53 452 | 80 x 10 x 4 $mm^3$ |
| Schlagzähigkeit | DIN 53 453 | 50 x 6 x 4 $mm^3$ |
| Zugfestigkeit | DIN 53 455 | Schulterstab Nr. 3 |
| Dehnung | DIN 53 455 | Schulterstab Nr. 3 |
| Elastizitätsmodul | DIN 53 457 | Schulterstab Nr. 3 |
| Martenstemperatur | DIN 53 458 | 60 x 15 x 4 $mm^3$ |
| Heat Distortion Temperature (HDT) | DIN 53 461 | 120 x 10 x 4 $mm^3$ |
| Glasübergangstemperatur (TG) | DIN 53 445 | 80 x 10 x 1 $mm^3$ |

Tabelle 3

| Eigenschaften der unverstärkten Formstoffe | | |
|---|---|---|
| Härtungsmittel | Beispiel 1 | Beispiel 2 |
| Härtemenge (g)<br>Härtebedingungen | 25<br>16 h 60 °C | 25<br>16 h 60 °C |
| Biegefestigkeit ($N/mm^2$) | 70 | 53 |
| Durchbiegung(mm) | 12 | 10 |
| Schlagzähigkeit ($kJ/m^2$) | 25 | 20 |
| Zugfestigkeit ($N/mm^2$) | 35 | 47 |
| Dehnung (%) | 3,9 | 3,4 |
| Elastizitätsmodul ($N/mm^2$) | 1500 | 2000 |
| Martenstemperatur (°C) | 53 | 40 |
| HDT (°C) | 75 | 67 |
| TG (°C) | 84 | 85 |

**Patentansprüche**

**1.** Verbindungen der allgemeinen Formel I

$A\text{-}R\text{-}(xR^1x\text{-}R)e\text{-}xR^1x\text{-}R\text{-}A$   I

worin bedeuten

A =

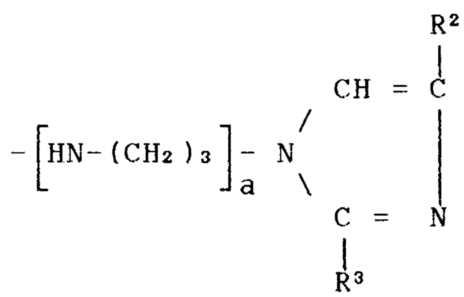

R =

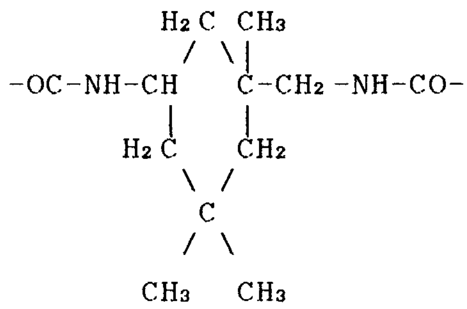

$R^1$ =

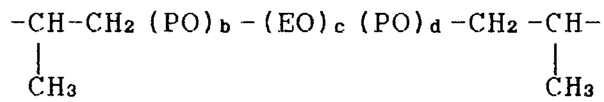

x = -O- oder -NH-, EO = $-CH_2-CH_2-O-$

PO =

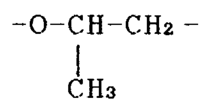

mit

a = 0 oder 1 und worin b, c, d zwischen 0 - 50 und die Summe b + c + d zwischen 0 - 50 liegt, e = 0 - 10 sein kann und

$R^2$, $R^3$ unabhängig voneinander Wasserstoff, $CH_3$, $C_2H_5$ oder der Phenylrest sein können.

**2.** Verbindungen gemäß Anspruch 1, dadurch herstellbar, daß in erster Stufe Ethergruppen enthaltende Diole und/oder Diamine an Isophorondiisocyanat (IPDI) bei Temperaturen von 80 - 140 °C, gegebenenfalls unter Mitverwendung von Lösungsmitteln und Katalysatoren im Molverhältnis von Diol und/oder Diamin zu IPDI von 1 : 1,8 bis 1 : 2 addiert werden und in zweiter Stufe diese freie Isocyanatgruppen enthaltenden Addukte mit Imidazolverbindungen der allgemeinen Formel II

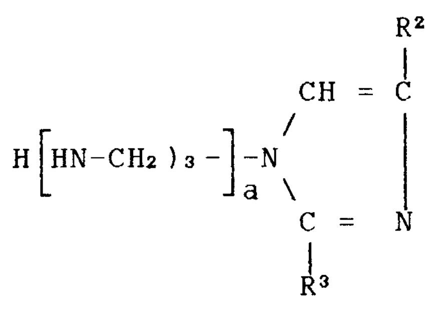

II

in der $R^2$ und $R^3$ unabhängig voneinander Wasserstoff, $CH_3$, $C_2H_5$ oder der Phenylrest sein können und a = 0 oder 1 ist, gegebenenfalls unter Mitverwendung von Lösungsmitteln bei Temperaturen von 100 - 120 °C in etwa equivalenten Mengen umgesetzt werden.

**3.** Verbindungen gemäß den Ansprüchen 1 und 2, dadurch gekennzeichnet, daß als Polvethergruppen enthaltende Diole und/oder Diamine solche auf Basis von Polypropylenoxid mit Molgewichten von 600 - 2500 mitverwendet werden.

4. Verbindungen gemäß den Ansprüchen 1 - 3, dadurch gekennzeichnet, daß als Imidazolverbindungen Imidazol, 2-Methylimidazol, 2-Ethyl-4-methyl-imidazol, 2-Phenylimidazol, N-(3-Aminopropyl)imidazol mitverwendet werden.

5. Verwendung der Verbindungen gemäß den Ansprüchen 1 bis 6 als Härtungsmittel für Epoxidharze, wobei die Verbindungen gemäß Anspruch 1 in Mengen von 10 - 50, bezogen auf 100 g Epoxidharz, mitverwendet werden.

6. Härtbare Epoxidharzzusammensetzung, enthaltend
a) ein Epoxidharz mit durchschnittlich mehr als einer Epoxidgruppe pro Molekül und
b) mindestens eine der Verbindungen gemäß den Ansprüchen 1 bis 4.

7. Härtbare Epoxidharzzusammensetzungen, worin die Verstärkungs- und Einlagematerialien bei Raumtemperatur mit dem Bindemittel, bestehend aus
a) einem Epoxidharz mit im Durchschnitt mehr als einer Epoxidgruppe pro Molekül und
b) mindestens einer Verbindung gemäß den Ansprüchen 1 bis 4 und gegebenenfalls
c) Lösungsmitteln, Füllstoffen, Pigmenten, Hilfsstoffen getränkt und gegebenenfalls bei erhöhter Temperatur in den halbfesten aber noch schmelzbaren Zustand (B-Zustand) überführt werden.

8. Härtbare Epoxidharzzusammensetzungen gemäß den Ansprüchen 6 und 7, dadurch gekennzeichnet, daß als Epoxidharze Glycidylether auf Basis von Bisphenol A, Bisphenol F und Novolaken mit Epoxidwerten von 0,18 - 0,6 mitverwendet werden.

9. Epoxidharzformkörper, dadurch gekennzeichnet, daß in erster Stufe die Verstärkungs- und Einlagematerialien bei Raumtemperatur mit dem Bindemittel, bestehend aus
a) einem Epoxidharz mit im Durchschnitt mehr als einer Epoxidgruppe pro Molekül und
b) mindestens einer der Verbindungen gemäß den Ansprüchen 1 bis 4 und gegebenenfalls
c) Lösungsmitteln, Füllstoffen, Pigmenten, Hilfsstoffen
überführt werden und in zweiter Stufe die Laminate oder Prepregs unter Formgebung oder zwischen zu verklebende Substrate gebracht, unter Anwendung von Druck bei erhöhter Temperatur ausgehärtet werden.

10. Verfahren zur Herstellung von faserverstärkten Trägermaterialien für den Elektrosektor durch Überführung von mit Bindemittel auf Basis von Epoxidharzen und aminischen Härtungsmitteln imprägnierten Verstärkungsmaterialien in erster Stufe durch Anwendung von Temperatur und gegebenenfalls von Druck in den B-Zustand überführt und in zweiter Stufe bei erhöhter Temperatur ausgehärtet werden, dadurch gekennzeichnet, daß als Epoxidharze
a) bromierte Epoxidharze mit im Durchschnitt mehr als einer Epoxidgruppe pro Molekül
und als aminische Härtungsmittel
b) mindestens eine der Verbindungen gemäß den Ansprüchen 1 bis 4 verwendet werden.

Europäisches Patentamt

# EUROPÄISCHER RECHERCHENBERICHT

Nummer der Anmeldung

EP 93 10 1480

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 335 228 (B.D. BEITCHMANN, E.A.)<br>* the whole document *<br>--- | 1-10 | C08G18/10<br>C08G18/80<br>C08L63/00 |
| Y | DATABASE WPIL<br>Derwent Publications Ltd., London, GB;<br>AN 86-103432<br>& JP-A-61 047 761 (MATSUSHITA ELEC IND KK)<br>8. März 1986<br>* Zusammenfassung *<br>--- | 1-10 | |
| Y | DATABASE WPIL<br>Derwent Publications Ltd., London, GB;<br>AN 89-004264<br>& JP-A-63 283 583 (DAIICHI KOGYO SEIYAKU)<br>21. November 1988<br>* Zusammenfassung *<br>----- | 1-10 | |

| RECHERCHIERTE SACHGEBIETE (Int. Cl.5 ) |
|---|
| C08G<br>C08L |

Der vorliegende Recherchenbericht wurde für alle Patentansprüche erstellt

| Recherchenort | Abschlußdatum der Recherche | Prüfer |
|---|---|---|
| DEN HAAG | 02 JULI 1993 | DERAEDT |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument